# EUROPÄISCHE PATENTSCHRIFT

(11) **EP 1 621 450 B1**
(45) Veröffentlichungstag und Bekanntmachung des Hinweises auf die Patenterteilung: **10.09.2008**
(21) Anmeldenummer: 05016150.4
(22) Anmeldetag: 26.07.2005
(51) Int. Cl.: B62D 21/14, B62D 53/06

(54) **Fahrzeug für den Transport schwerer Lasten**
Vehicle for the transport of heavy loads
Véhicule pour le transport de charges lourdes

(30) Priorität: 27.07.2004 DE 102004036411
(43) Veröffentlichungstag der Anmeldung: 01.02.2006
(73) Patentinhaber: Goldhofer Aktiengesellschaft, 87700 Memmingen (DE)
(72) Erfinder: Pfeiler, Ludwig, 87784 Westerheim (DE)
(74) Vertreter: Lemke, Jörg-Michael

(56) Entgegenhaltungen:
- EP-A1- 1 122 151
- DE-A1- 2 919 341
- DE-U1- 29 616 001
- ES-A2- 2 186 502
- SU-A4- 1 838 169

## Beschreibung

Die Erfindung betrifft ein Fahrzeug für den Transport schwerer Lasten, mit einem vorderen Träger, einer anschließenden tiefliegenden Ladefläche, einem hinteren Träger und zumindest einem Fahrwerk, wobei die tiefliegende Ladefläche eine Teleskopverbindung zwischen dem vorderen Träger und dem hinteren Träger herstellt, eine relative Verschiebung der beiden Träger zueinander in Längsrichtung ermöglicht und von einer Aufnahmehülse und einer in dieser eingeschobenen und verschieb- und feststellbar gelagerten Schubstange gebildet ist, wobei diese Aufnahmehülsen/Schubstangen-Paarung als Teleskopträger in zusammengeschobenem Zustand des Fahrzeugs zumindest teilweise zwischen und/oder neben den Rädern des Fahrwerks angeordnet ist.

Bei einem aus der EP 1 122 151 B1 bekannten Fahrzeug dieser Bauart sind die Räder in einer Einzelradaufhängung an dem Fahrwerk gelagert. Diese Konstruktion baut besonders anspruchsvoll und infolge der aus Festigkeitsgründen benötigten Materialquerschnitte auch sehr schwer und verursacht deshalb einen erheblichen technischen und wirtschaftlichen Aufwand. Trotzdem lässt ihre Fahrstabilität zu wünschen übrig, da sie sich als relativ nachgiebig erweist. Jedoch erbringt diese Bauart den Vorteil einer maximalen Ausziehbarkeit bzw. Verlängerung des Teleskopträgers. Bisher bildete(n) die Achse(n) eines zum Beispiel hinteren Trägers des Fahrzeugs ein Hindernis für eine Verlängerung des Teleskopträgers.

Die der Erfindung zugrunde liegende Aufgabe wird darin gesehen, ein Fahrzeug der eingangs genannten Bauart zu schaffen, das bei verringertem technischem und wirtschaftlichem Aufwand unter Beibehaltung des Vorteils der maximalen Verlängerungsmöglichkeit des Teleskopträgers eine größere Fahrstabilität gewährleistet.

Diese Aufgabe wird erfindungsgemäß dadurch gelöst, daß auf beiden Seiten des aus Schubstange und Aufnahmehülse bestehenden Teleskopträgers jeweils koaxial zueinander angeordnete Räder des Fahrwerks bzw. der Fahrwerke gemeinsam auf einer durchgehenden Achse gelagert sind und diese Achse um den Teleskopträger herum eine Kröpfung aufweist.

Dabei versteht es sich, daß jedwede Form einer Achse, ob nun eine Starrachse, eine nachlaufgelenkte Achse oder eine zwangsgelenkte Achse, erfindungsgemäß ausgebildet werden kann.

Die Kröpfung macht es möglich, trotz der Tatsache, daß der Teleskopträger zwischen und/oder neben den Rädern des Fahrwerks angeordnet ist, eine durchgehende Achse zu verwenden, die a priori, sozusagen seit Postkutschenzeiten, technisch einfacher ausgebildet ist und geringere Kosten verursacht als eine Einzelradaufhängung, jedoch einem Schwerlasttransportfahrzeug, und um ein solches handelt es sich hier, viel mehr Fahrstabilität verleiht.

Vorteilhaft folgt dabei die Form der Kröpfung der Achse der Form der Schubstangen/Aufnahmehülsen-Paarung. Bei der bevorzugten Ausführungsform ist die Schubstangen/Aufnahmehülsen-Paarung im Querschnitt rechteck- bzw. kastenförmig, so daß auch die Kröpfung der Achse als Rechteckbügel in Abstand um die Schubstangen/Aufnahmehülsen-Paarung herumgeführt ist, und zwar mit Rücksicht auf die Federwege der Achse zweckmäßig um die Oberseite der Paarung.

Dabei wird es bevorzugt, jede Achse zu beiden Seiten der Schubstange und/oder der Aufnahmehülse federnd am jeweiligen Träger aufzuhängen und mit Längslenkern an der mit jeweils einem der Träger fest verbundenen Schubstange oder Aufnahmehülse anzulenken.

Die Erfindung ist im Folgenden anhand eines in der Zeichnung dargestellten Ausführungsbeispiels näher erläutert.

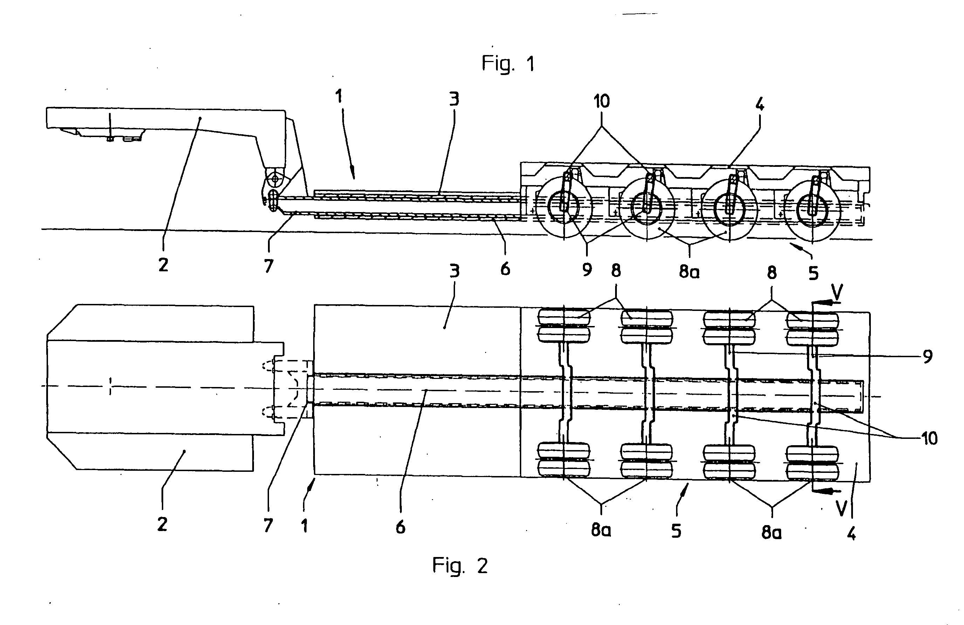

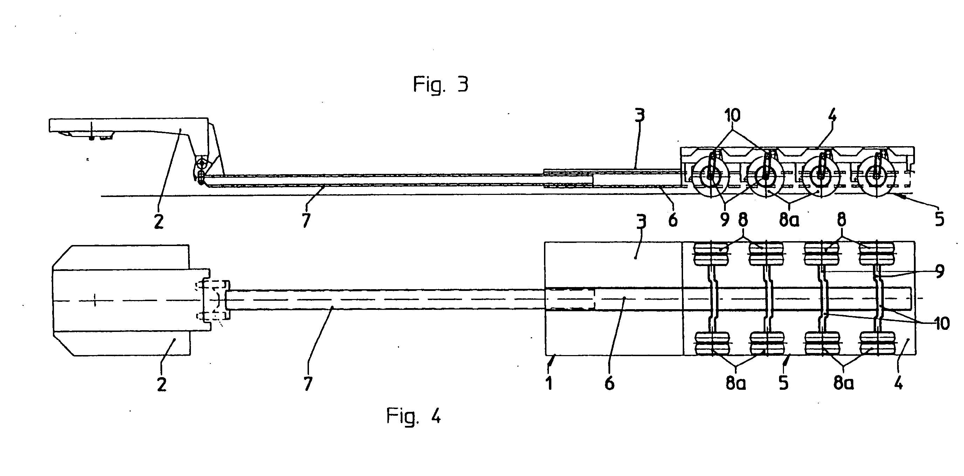

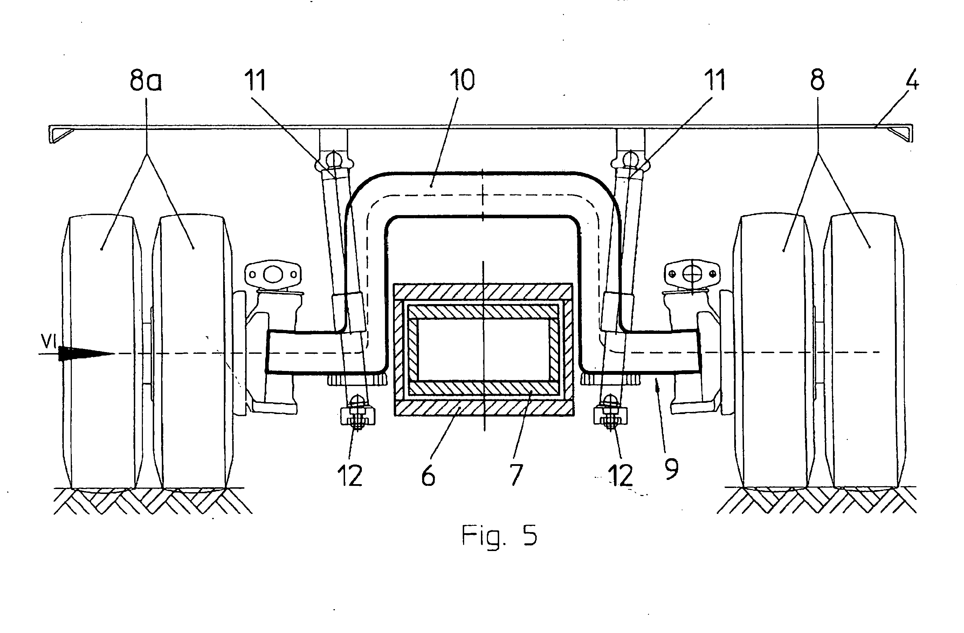

Es zeigt:
Fig. 1
   eine Seitenansicht eines Sattelschlepperaufliegers nach der Erfindung in zusammengeschobenem Zustand, teilweise geschnitten;
Fig. 2
   eine Draufsicht auf den Auflieger nach Fig. 1;
Fig. 3
   eine der Fig. 1 entsprechende Seitenansicht des Sattelschlepperaufliegers in auseinandergezogenem Zustand und in verkleinertem Maßstab, ebenfalls teilweise geschnitten;
Fig. 4
   eine Draufsicht auf den Auflieger nach Fig. 3;
Fig. 5
   einen Schnitt längs der Linie V-V in Fig. 2 in vergrößertem Maßstab;
Fig. 6
   eine Seitenansicht in Pfeilrichtung VI der Fig. 5 in nochmals vergrößertem Maßstab.

Die Figuren 1 und 2 zeigen als Ausführungsbeispiel einen Sattelschlepperauflieger 1. Derselbe besitzt einen vorderen Träger 2 in Form eines sogenannten Schwanenhalses, eine anschließende tiefliegende Ladefläche 3, einen hinteren Träger 4 und ein Fahrwerk 5.

Die tiefliegende Ladefläche 3 besitzt zwar hier die dargestellte verbreiterte Ladefläche, besteht jedoch im wesentlichen aus einer Teleskopverbindung zwischen dem vorderen Träger 2 und dem hinteren Träger 4, die eine relative Verschiebung der beiden Träger 2, 4 zueinander in Längsrichtung (Pfeil A) ermöglicht. Diese Teleskopverbindung wird von einer Aufnahmehülse 6 und einer in dieser eingeschobenen und verschieb- und festlegbar gelagerten Schubstange 7 gebildet. Diese Aufnahmehülsen/Schubstangen-Paarung ist als Teleskopträger in dem in den Fig. 1 und 2 gezeigten zusammengeschobenen Stellung des Fahrzeugs 1 zwischen den Rädern 8 und 8a des Fahrwerks 5 angeordnet, wobei die Räder der einen Fahrzeugseite mit den Bezugszeichen 8 und die Räder der anderen Fahrzeugseite mit den Bezugszeichen 8a bezeichnet worden sind. Bei der gezeigten Ausführungsform ist die Aufnahmehülse 6 mit dem hinteren Träger 4, die Schubstange 7 hingegen mit dem vorderen Träger 2 fest verbunden, was sich bewährt hat. Natürlich wäre auch eine umgekehrte Anordnung möglich.

Die Darstellungen in den Figuren 3 und 4 zeigen den Sattelschlepperauflieger 1, im Maßstab etwas verkleinert, in auseinandergezogener Stellung. Es versteht sich, daß auch Zwischenstellungen zwischen den beiden Extremstellungen, nämlich ganz zusammengeschoben und ganz auseinandergezogen, möglich sind. Schubstange 7 und Aufnahmehülse 6 sind in ihrer jeweiligen Stellung aneinander verriegelbar, beispielsweise durch eine nicht gezeigte Steckbolzenverbindung.

Die Fig. 1 und 3 zeigen den aus Aufnahmehülse 6 und Schubstange 7 bestehenden Teleskopträger im Bereich zwischen dem vorderen Träger 2 und dem hinteren Träger 4 in Längsrichtung aufgeschnitten und damit besonders deutlich.

Erfindungsgemäß sind nun auf beiden Seiten des aus Schubstange 7 und Aufnahmehülse 6 bestehenden Teleskopträgers die jeweils koaxial zueinander angeordneten Räder 8, 8a des Fahrwerks 5 gemeinsam auf einer durchgehenden Achse 9 gelagert, wobei diese Achse 9 um den Teleskopträger herum eine Kröpfung 10 aufweist, die besonders deutlich aus Fig. 5 hervorgeht.

Bei der gezeigten, bevorzugten Ausführungsform ist die Kröpfung 10 jeder Achse 9 um die Oberseite des Teleskopträgers herumgeführt, um die erforderlichen Federwege nebst Bodenfreiheit sicherzustellen.

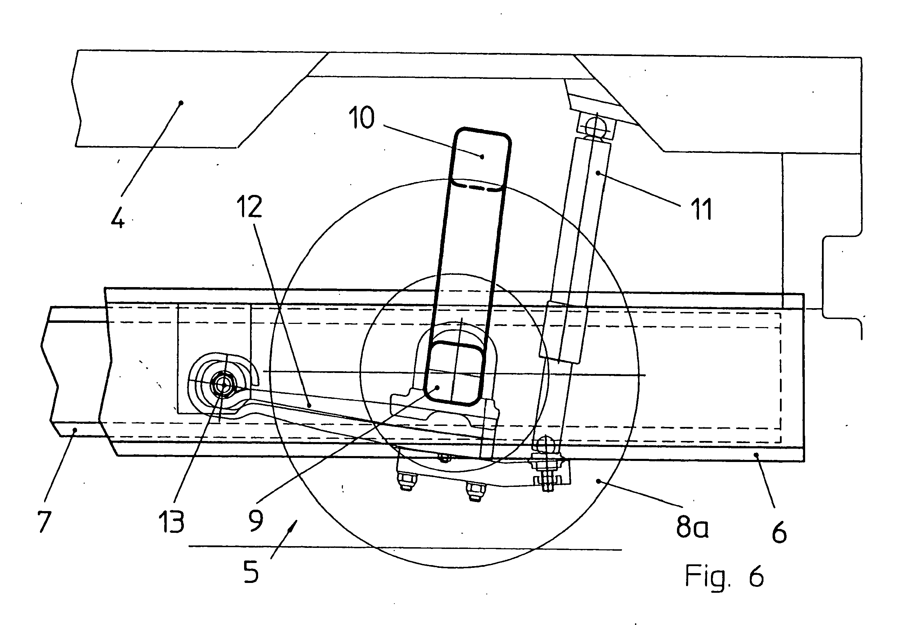

Dabei ist jede Achse 9 zu beiden Seiten der Schubstange 7 bzw. der Aufnahmehülse 6 federnd am jeweiligen Träger 2, 4 aufgehängt, wobei hier hydraulische Federn 11 verwendet sind, und mit Längslenkern 12 an der mit dem hinteren Träger 4 in nicht gezeigter Weise fest verbundenen Aufnahmehülse 6 über Achsbolzen 13 angelenkt, wie Fig. 6 zeigt.

Die erfindungsgemäße Ausgestaltung gewährleistet eine besonders gute Fahrstabilität. Dabei versteht es sich, daß mit der Erläuterung der Erfindung anhand eines Sattelschlepperaufliegers keine Beschränkung derselben einhergeht, ist es doch dem Fachmann deutlich, daß die Erfindung nicht nur hierauf oder nur auf Anhänger allgemein, sondern auch auf wie auch immer im einzelnen ausgebildete Schwerlastkraftfahrzeuge anwendbar ist.

## Patentansprüche

1. Fahrzeug (1) für den Transport schwerer Lasten, mit einem vorderen Träger (2), einer anschließenden tiefliegenden Ladefläche (3) , einem hinteren Träger (4) und zumindest einem Fahrwerk (5), wobei die tiefliegende Ladefläche (3) eine Teleskopverbindung zwischen dem vorderen Träger (2) und dem hinteren Träger (4) herstellt, eine relative Verschiebung der beiden Träger (2, 4) zueinander in Längsrichtung ermöglicht und von einer Aufnahmehülse (6) und einer in dieser eingeschobenen und verschieb- und feststellbar gelagerten Schubstange (7) gebildet ist, wobei diese Aufnahmehülsen/Schubstangen-Paarung (6, 7) als Teleskopträger in zusammengeschobenem Zustand des Fahrzeugs (1) zumindest teilweise zwischen und/oder neben den Rädern (8, 8a) des Fahrwerks (5) angeordnet ist,
**dadurch gekennzeichnet,**
**daß** auf beiden Seiten des aus Schubstange (7) und Aufnahmehülse (6) bestehenden Teleskopträgers (6, 7) jeweils koaxial zueinander angeordnete Räder (8, 8a) des Fahrwerks (5) bzw. der Fahrwerke gemeinsam auf einer durchgehenden Achse (9) gelagert sind und diese Achse (9) um den Teleskopträger herum eine Kröpfung (10) aufweist.

2. Fahrzeug (1) nach Anspruch 1,
**dadurch gekennzeichnet,**
**daß** die Kröpfung (10) um die Oberseite des Teleskopträgers herumgeführt ist.

3. Fahrzeug nach Anspruch 1 oder 2,
**dadurch gekennzeichnet,**
**daß** jede Achse (9) zu beiden Seiten der Schubstange (7) und/oder der Aufnahmehülse (6) federnd am jeweiligen Träger (2 bzw. 4) aufgehängt und mit Längslenkern (12) an der mit jeweils einem der Träger (2 bzw. 4) fest verbundenen Schubstange (7) oder Aufnahmehülse (6) angelenkt ist.

## Claims

1. A vehicle (1) for the transport of heavy loads comprising a front beam (2), a joining loading surface (3) on a lower level, a rear beam (4) and at least one undercarriage (5), the joining loading surface (3) on a lower level establishing a telescopic connection between front beam (2) and rear beam (4) allowing shifting of the two beams relative to each other in longitudinal direction and is formed by a receiving sleeve (6) and a slide shaft (7) slid into the receiving sleeve (6) and being slideable and lockable therein, this pair (6, 7) as a telescopic beam built of receiving sleeve and slide shaft in its slid-in-position being at least partially arranged between and/or aside of the wheels (8, 8a) of the undercarriage (5),
**characterized in**
**that** on both sides of the telescopic beam (6, 7) consisting of slide shaft (7) and receiving sleeve (6) wheels (8, 8a) of the undercarriage (5) or undercarriages, resp., are arranged coaxially to each other in common on a traversing axle (9), the axle (9) having a saddle bend (10) around the telescopic beam (6, 7).

2. The vehicle of claim 1,
**characterized in**
**that** the saddle bend (10) guides around the upper side of the telescopic beam (6, 7).

3. The vehicle of claim 1 or 2,
**characterized in**
**that** each axle (9) on both sides of the slide shaft (7) and/or the receiving sleeve (6) is mounted to the respective beam (2 or 4, resp.) in a springy fashion and is linked by longitudinal connecting rods (12) to the slide shaft (7) or to the receiving sleeve (6) which are connected firmly to one of the beams (2 and 4) resp..

## Revendications

1. Véhicule (1) destiné au transport de charges lourdes, doté d'un longeron (2) avant, d'une zone de chargement basse (3) y étant raccordée, d'un longeron arrière (4) et d'au moins un châssis (5),
la zone de chargement basse (3) établissant une liaison télescopique entre le longeron avant (2) et le longeron arrière (4), permettant un déplacement relatif des deux longerons (2, 4) l'un par rapport à l'autre dans le sens longitudinal et étant formée d'un manchon de réception (6) et d'une jambe de force introduite dans celui-ci et logée de manière à pouvoir coulisser et à être fixée,
cette combinaison manchon de réception/jambe de force (6, 7) en tant que support télescopique dans l'état assemblé du véhicule (1) étant disposée au moins partiellement entre et/ou à côté des roues (8, 8a) du châssis (5),
**caractérisé**
**par le fait que** sur les deux faces du support télescopique (6, 7) constitué de la jambe de force (7) et du manchon de réception (6) des roues (8, 8a) du châssis (5) ou des châssis respectivement disposées de façon coaxiale les unes par rapport aux autres sont logées conjointement sur un axe continu (9) et que cet axe (9) présente un coude (10) faisant le tour du support télescopique.

2. Véhicule (1) selon la revendication 1, **caractérisé par le fait que** le coude (10) fait le tour de la face supérieure du support télescopique.

3. Véhicule selon la revendication 1 ou 2, **caractérisé par le fait que** chaque axe (9) est suspendu de manière élastique des deux côtés de la jambe de force (7) et/ou du manchon de réception (6) au longeron correspondant (2 ou 4) et est articulé à l'aide de tirants longitudinaux (12) à la jambe de force (7) ou au manchon de réception (6) rendus solidaires avec un des longerons correspondants (2 ou 4).
